# EUROPÄISCHE PATENTANMELDUNG

(11) **EP 1 900 591 A1**
(43) Veröffentlichungstag der Anmeldung: **19.03.2008**
(21) Anmeldenummer: 07017341.4
(22) Anmeldetag: 05.09.2007
(51) Int. Cl.: B61D 17/06, B61D 15/06, B61C 17/04

(54) **Lokomotive mit Knautschzone**

(30) Priorität: 14.09.2006 DE 102006043926
(71) Anmelder: Voith Turbo Lokomotivtechnik GmbH & Co.KG, 24106 Kiel (DE)
(72) Erfinder: Caminada, Rafael, 8302 Kloten (CH); Schneider, Sieghard, 88239 Wangen (DE)
(74) Vertreter: Dr. Weitzel & Partner

(57) **Zusammenfassung**

Die Erfindung betrifft einen Kasten einer Lokomotive
- mit einem Mittelteil (1);
- mit je einem an dessen beiden Enden befindlichem Führerhaus (2), das ein Frontteil (2.1) und ein Zwischenteil (2.2) aufweist, in welchem sich ein Ausgang (2.4) befindet.

Die Erfindung ist gekennzeichnet durch die folgenden Merkmale:
- das Frontteil (2.1) weist eine steife Frontwand auf;
- der Ausgang (2.4) ist von einem starren Rahmen umgeben;
- in Fahrtrichtung gesehen vor oder hinter dem Ausgang (2.4) ist eine Knautschzone oder eine Sollbruchstelle (5) vorgesehen.

## Beschreibung

Die Erfindung betrifft eine Lokomotive, insbesondere den sogenannten Kasten der Lokomotive. Dieser weist ein Mittelteil auf. An den beiden Enden des Mittelteiles befindet sich je ein Führerhaus. Der Kasten enthält ferner alle wichtigen Antriebsaggregate, vor allem den Motor, das zugehörende Getriebe sowie zahlreiche Hilfsaggregate wie Lüfter und so weiter.

Es sind zahlreiche Druckschriften bekannt geworden, die Lokomotiven betreffen. Siehe beispielsweise WO 2005/085032, WO 2005/085033, US 5 579 699.

Eine Lok der genannten Bauart hat in der Regel ein außerordentlich hohes Eigengewicht, das weit über 100 t betragen kann. Hierzu tragen der Motor bei, dessen Gewicht in der Größenordnung von 30 t liegen kann, das Getriebe, das in der Größenordnung von 10 t liegen kann, aber auch die besonderen Anforderungen an die Steifigkeit des Kastens im Hinblick auf die Crash-Festigkeit. Die Anforderungen sind in letzter Zeit durch behördliche Vorgaben gestiegen. Der Kasten muss demgemäß Teile mit besonders hoher Steifigkeit aufweisen, in Kombination mit Teilen, die Sollbruchstellen aufweisen oder sich leicht verformen lassen. Dabei ist die Crash-Tauglichkeit durch den Kasten ohne den Dachaufbau bestimmt. Dies heißt, dass der eigentliche Kasten ohne Dach die genannten Anforderungen bezüglich der Steifigkeit aufweisen muss, nicht aber das Dach.

Auf den Kasten wirken trotz dessen Steifigkeit auch im Normalbetrieb Kräfte ein, die zu vorübergehenden, nicht bleibenden Verformungen führen. Diese Kräfte treten bei unterschiedlichen Betriebsbedingungen auf, beispielsweise bei Kurvenfahrt oder bei unterschiedlichen Ladegewichten.

Bei allen Konstruktionen, bei denen die Auswirkungen eines Aufpralls abgemildert werden sollen (crashtaugliche Konstruktionen), werden Elemente in die Lokomotive oder ein sonstiges Fahrzeug eingebaut, mit denen die Aufprallenergie so weit wie möglich aufgezehrt wird. Solche Elemente können eine reversible oder eine irreversible Verformung im Falle eines Aufpralles erleiden. Elemente mit reversibler Verformung sind Puffer, bei welchen Federn verformt werden. Elemente mit irreversibler Verformung sind Knautschzonen oder Sollbruchstellen. Auch kommen hydraulische Dämpfer in Betracht, bei welchen durch den Aufprall ein flüssiges Medium aus einem ersten in einen zweiten Raum verdrängt wird, wobei ein Teil der Stoßenergie eines Aufpralles abgebaut wird.

Ganz entscheidend ist die Vermeidung von Personenschäden. Man versucht, die Lokomotive und insbesondere das Führerhaus derart zu gestalten, dass das im Führerhaus befindliche Personal eine möglichst hohe Überlebenschance hat.

Zur Verwirklichung dieser Ziele sind zahlreiche Lösungswege bekannt geworden. WO 2005/085033 A1 beschreibt eine Lokomotive, dessen Führerhaus eine Frontwand mit einer Soll-Biegestelle aufweist. Die Frontwand soll sich hierdurch bei einem Aufprall in kontrollierbarer Weise verformen und damit Aufprallenergie abbauen.

EP 1 215 098 B1 beschreibt ein Schienenfahrzeug mit einem Führerhaus, das Energie-Absorptionselemente aufweist. Das Schienenfahrzeug weist ein Gehäuse und ein Führerhaus auf. Zwischen dem Führerhaus und dem Gehäuse befindet sich eine Vorrichtung zur Energieaufnahme in parallelepipedischer Form. Die Vorrichtung umfasst zwei Stahlrahmen, die einen gegenseitigen Abstand aufweisen. Beide Stahlrahmen sind an einer oben befindlichen horizontalen Achse schwenkbar gelagert. Bei Auftreten eines Stoßes auf die Vorderseite des Führerhauses wird der vordere Rahmen entgegen der Kraft einer Dämpfungsvorrichtung um die horizontale Achse verschwenkt. Diese Ausführung ist aufwendig und kostenintensiv.

Der Erfindung liegt die Aufgabe zugrunde, eine Lokomotive derart zu gestalten, dass bei einem Aufprall die Aufprallenergie soweit wie möglich aufgezehrt wird, dass der Schaden an der Lokomotive, vor allem an den teureren Teilen, soweit wie möglich minimiert wird, und dass das im Führerhaus befindliche Personal eine möglichst hohe Überlebenschance hat.

Diese Aufgabe wird durch die Merkmale von Anspruch 1 gelöst.

Demgemäß wird das Frontteil des Führerhauses als steife Konstruktion ausgeführt. Gleiches gilt für den Türbereich des Zwischenteiles. Jener Bereich des Zwischenteiles, welcher sich - in Fahrtrichtung gesehen - vor oder hinter dem Türbereich befindet - ist mit einer Knautschzone oder Sollbruchstelle ausgestattet.

Hierdurch wird erreicht, dass bei einfacher Bauweise der Lokomotive bei einem Aufprall (Crash) je nach Heftigkeit gegebenenfalls nur das Zwischenteil verformt und damit unbrauchbar gemacht wird, die übrigen Bauteile der Lokomotive hingegen nicht oder kaum beschädigt werden. Ferner ist das im Führerhaus befindliche Personal von der starren und steifen Konstruktion des Führerhauses umgeben und somit weitgehend geschützt. Ferner erlaubt es die Knautschzone oder Sollbruchstelle des Zwischenteiles dem Personal aus dem Führerhaus zum Türbereich zu fliehen, da auch nach Verformung der beteiligten Wände im Knautschbereich oder der Sollbruchstelle noch genügend freies Profil hierzu verbleibt.

Besonders vorteilhaft ist es, den starren, steifen Türbereich in das gesamte starre, steife Führerhaus zu integrieren, so dass diese beiden eine einzige starre Frontstruktur bilden. Die Knautschzone oder Sollbruchstelle ist in diesem Falle - in Fahrtrichtung gesehen - hinter dem Türbereich angeordnet. Der Lokführer kann somit das Führerhaus vor oder während oder nach einem Crash durch die Tür verlassen, wodurch sein Weg so kurz wie möglich wird.

Die Erfindung ist anhand der Zeichnung näher erläutert. Darin ist im einzelnen folgendes dargestellt:
- Figur 1: zeigt in einer Seitenansicht einen Lokkasten ohne Dach.

- Figur 2: zeigt das Mitteilteil des Lokkastens mit Dach in einer Draufsicht.
- Figur 3: zeigt eines der beiden Führerhäuser der Lok in einer Seitenansicht.
- Figur 4: zeigt in einer 3D-Ansicht das Führerhaus mit Türbereich als starre Einheit.

Der in den Figuren gezeigte Lokkasten ist im wesentlichen symmetrisch aufgebaut. Er umfasst ein Mittelteil 1, an dessen beiden stirnseitigen Enden sich ein Führerhaus 2 befindet. Da die beiden Führerhäuser von gleichem Aufbau sind, sind sie auch mit denselben Bezugszeichen versehen.

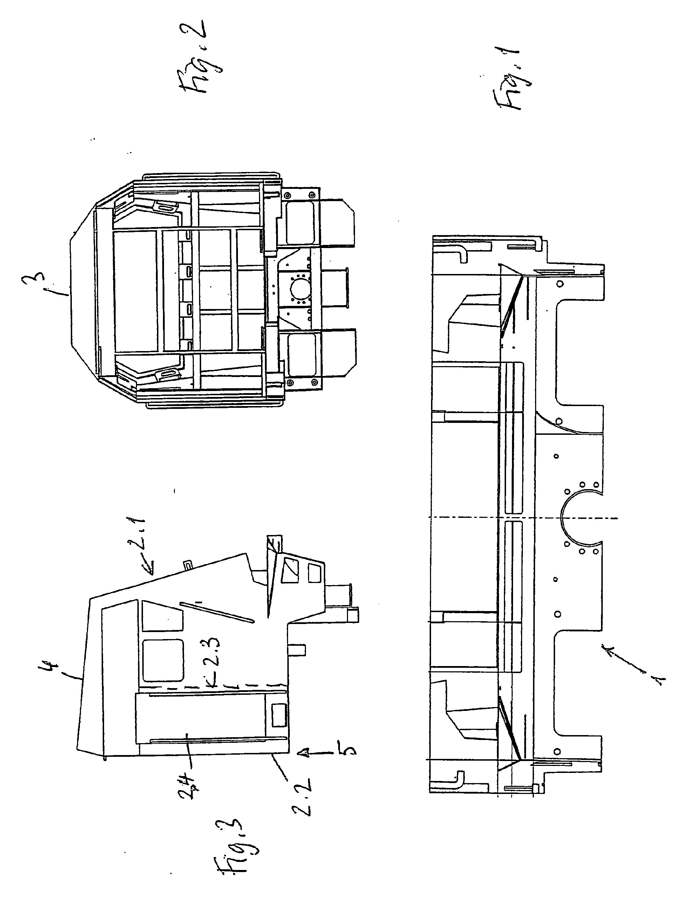

Figur 2 lässt das Dach 4 erkennen, das sich auf dem Mittelkasten 1 befindet.

Wie Figur 3 zeigt, umfasst jedes Führerhaus ein Frontteil 2.1 sowie ein Zwischenteil 2.2. Die gestrichelte Linie 2.3 deutet die Grenzlinie zwischen Frontteil 2.1 und Zwischenteil 2.2 an. Zwischenteil 2.2 enthält einen Ein- und Ausgang mit einer Tür 2.4.

Mittelteil 1 weist ein ihm eigenes Dach 3 auf. Auf den beiden Führerhäusern ist jeweils ein Dach 4 zugeordnet.

Wie man aus Figur 3 erkennt, ist eine Sollbruchstelle 5 unmittelbar am Ende von Zwischenteil 2.2 angeordnet.

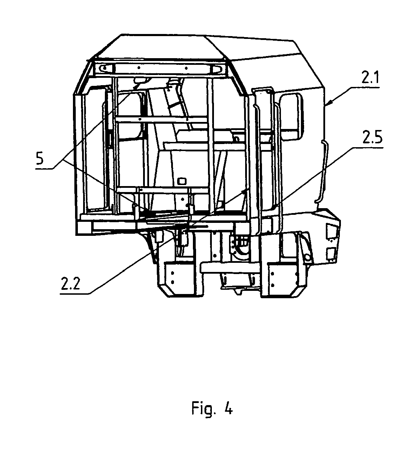

Aus Figur 4 ist klar erkennbar, dass das Frontteil 2.1 unmittelbar an den Türbereich angeschlossen ist - siehe die Türöffnung 2.5. Die Tür befindet sich somit in unmittelbarer Nähe des Führerstandes, so dass der Lokführer in einem Notfall schnellstens das Führerhaus verlassen kann.

Eine besonders interessante Ausführungsform besteht in folgendem: In einem oberen Übergangsbereich zwischen Frontteil 2.1 und Zwischenteil 2.2 ist eine reale oder imaginäre horizontale Schwenkachse vorgesehen. Diese befindet sich im Bereich der Knautschzone 5 beziehungsweise einer hier vorgesehenen Sollbruchstelle, so dass Schwenkachse und Knautschzone beziehungsweise Sollbruchstelle im wesentlichen in einer vertikalen oder annähernd vertikalen Ebene liegen. Bei einem Aufprall auf die Lok von vorn vermag das Frontteil 2.1 eine rückwärtige Schwenkbewegung, das heißt in Richtung auf das Mittelteil 1 auszuführen, wobei es zu einem Knautschen der Knautschzone 5 beziehungsweise zu einem Bruch an der Sollbruchstelle kommt.

### Bezugszeichenliste

- 1: Mittelteil
- 2: Führerhaus
- 2.1: Frontteil
- 2.2: Zwischenteil
- 2.3: Grenzlinie zwischen Frontteil und Zwischenteil
- 2.4: Ein- und Auslass
- 2.5: Türöffnung
- 4: Dach der Führerhäuser
- 5: Sollbruchstelle

## Patentansprüche

1. Kasten einer Lokomotive;
1.1 mit einem Mittelteil (1):
1.2 mit je einem an dessen beiden Enden befindlichem Führerhaus (2), das ein Frontteil (2.1) und ein Zwischenteil (2.2) aufweist, in welchem sich ein Ausgang (2.4) befindet;
**gekennzeichnet durch** die folgenden Merkmale:
1.3 das Frontteil (2.1) weist eine steife Frontwand auf;
1.4 der Ausgang (2.4) ist von einem starren Rahmen umgeben;
1.5 in Fahrtrichtung gesehen vor oder hinter dem Ausgang (2.4) ist eine Knautschzone oder eine Sollbruchstelle (5) vorgesehen.

2. Kasten einer Lokomotive nach Anspruch 1, **dadurch gekennzeichnet, dass** die Knautschzone oder die Sollbruchstelle (5) - in Fahrtrichtung gesehen - hinter dem Ausgang (2.4) vorgesehen ist.

3. Frontteil (2.1) und Zwischenteil (2.2) sind in einem oberen Übergangsbereich derart gestaltet, dass Frontteil (2.1) eine Schwenkbewebung um eine im Übergangsbereich befindliche horizontale Achse ausführt.

4. Kasten einer Lok nach Anspruch 3, **dadurch gekennzeichnet, dass** die horizontale Achse eine imaginäre Achse ist.
